# EUROPEAN PATENT APPLICATION

(11) **EP 4 733 970 A1**
(43) Date of publication of application: **29.04.2026**
(21) Application number: 24832284.4
(22) Date of filing: 30.05.2024
(51) Int. Cl.: G06F 21/54, G06F 21/60, G06F 21/71, G06F 21/55, G06F 21/52

(54) **MEMORY MANAGEMENT METHOD FOR SECURITY, AND ELECTRONIC DEVICE THEREFOR**

(30) Priority: 27.06.2023 KR 20230082505; 04.12.2023 KR 20230173681
(71) Applicant: Samsung Electronics Co., Ltd., Suwon-si, Gyeonggi-do 16677 (KR)
(72) Inventor: LEE, Dongsun, Suwon-si, Gyeonggi-do 16677 (KR)
(74) Representative: Gulde & Partner
(86) International application number: PCT/KR2024/007372
(87) International publication number: WO 2025/005502

(57) **Abstract**

An electronic device according to one embodiment of the present invention comprises at least one processor and a memory connected to the at least one processor. The memory can store instructions that, when executed by the at least one processor, cause the electronic device to: generate a random key when a first program is executed; store the generated random key in a register included in the at least one processor; perform a first function included in the first program; store, in the memory, a first return address for the first function in response to a second function being called from the first function; store, in the register, a first key value generated by randomizing, through the first return address, a random key stored in the register; store, in the memory, a second return address generated by encrypting the first return address with the first key value; perform the second function; decrypt the second return address; and, when the decrypted second return address is the same as the first return address, restore the first key value to the first return address so as to store the restored first key value in the register; and terminate the second function and return to the first function.

## Description

### [Technical Field]

The various embodiments relate to a memory management method for security and an electronic device for the same.

### [Background Art]

Various services and additional functions provided via an electronic device, for example, a portable electronic device such as a smartphone, are gradually increasing. In order to increase the utility of such electronic devices and to satisfy the demands of various users, communication service providers or electronic device manufacturers are competitively developing electronic devices to provide various functions and to differentiate from other companies. Accordingly, various functions provided via the electronic device are becoming increasingly sophisticated. Although users of electronic devices are now able to use various services, various security issues are also emerging at the same time.

### [Detailed Description of the Invention]

### [Technical Problem]

An electronic device may execute application and system processes according to software commands stored in memory. However, these processes may be maliciously altered by software instructions due to external attacks. For example, when an application to which a malicious code is inserted by an attacker is executed, the execution of the malicious code may damage data in memory or damage a stack pointer or a return address, so that a value of the stack pointer or the return address is changed, and thereby an undesired software instruction may be executed.

For example, return-oriented programming (ROP) may be exploited by attackers to obtain control of computer systems or other electronic devices, and when a return address is manipulated, the system may not perform normal operations and may perform operations desired by the attacker. Jump-oriented programming (JOP) may manipulate a jump address instead of a return address to control a program flow as desired by the attacker.

Although various methods for preventing the above-described attacker's attack in a hardware manner have been proposed, a memory security technique for preventing the same in a software manner may be required.

According to various embodiments of the disclosure, a software-based memory management method and an electronic device therefor are provided.

The technical task matter to be achieved in the disclosure may not be limited to the above-mentioned technical tasks, and other technical tasks which are not mentioned herein may be clearly understood from the following description by those skilled in the art to which the disclosure pertains.

### [Technical Solution]

An electronic device according to an embodiment may include at least one processor and memory connected to the at least one processor. The memory may store instructions that, when executed by the at least one processor, cause the electronic device to generate a random key at a point in time of executing a first program and store the generated random key in a register included in the at least one processor, to perform a first function included in the first program, to store a first return address for the first function in the memory as a second function is called in the first function, to store, in the register, a first key value generated by randomizing the random key stored in the register using the first return address, to store, in the memory, a second return address generated by encrypting the first return address with the first key value, to perform the second function, to decrypt the second return address, when the decrypted second return address is identical to the first return address, to restore the first key value using the first return address and store the restored first key value in the register, and to terminate the second function, and return to the first function.

A memory management method of an electronic device according to an embodiment may include an operation of generating a random key at a point in time of executing a first program, and storing the generated random key in a register included in at least one processor, an operation of performing a first function included in the first program, an operation of storing a first return address for the first function in memory as a second function is called in the first function, an operation of storing, in the register, a first key value generated by randomizing the random key stored in the register using the first return address, an operation of storing, in the memory, a second return address generated by encrypting the first return address with the first key value, an operation of performing the second function, an operation of decrypting the second return address, when the decrypted second return address is identical to the first return address, an operation of restoring the first key value using the first return address, and storing the restored first key value in the register, and an operation of terminating the second function and returning to the first function.

A non-transitory computer readable medium storing computer-executable instructions, wherein the computer-executable instructions, when executed, may be configured to cause an electronic device including at least one processor to perform an operation of generating a random key at a point in time of executing a first program, and storing the generated random key in a register included in the at least one processor, an operation of performing a first function included in the first program, as a second function is called in the first function, an operation of storing a first return address for the first function in memory, an operation of storing, in the register, a first key value generated by randomizing the random key stored in the register using the first return address, an operation of storing, in the memory, a second return address generated by encrypting the first return address with the first key value, an operation of performing the second function, an operation of decrypting the second return address, when the decrypted second return address is identical to the first return address, an operation of restoring the first key value using the first return address, and storing the restored first key value in the register, and an operation of terminating the second function and returning to the first function.

### [Brief Description of Drawings]

FIG. 1 is a block diagram of an electronic device in a network environment according to an embodiment.
FIG. 2 is a diagram illustrating an example of a configuration of an electronic device according to an embodiment.
FIG. 3 is a diagram illustrating a memory management method for security according to an embodiment.
FIG. 4 is a flowchart illustrating an example of an operation of an electronic device according to an embodiment.
FIG. 5 is a diagram illustrating an example of a program code for configuring an initial value of a key register to a random value according to an embodiment.
FIG. 6 is a diagram illustrating an example of a source code of a program for protecting a return address according to an embodiment.
FIG. 7 illustrates a program source code and a stack for protecting a return address according to an embodiment.
FIGS. 8A and 8B are diagrams illustrating a procedure of writing source code of a program for protecting a return address according to an embodiment.

### [Mode for Carrying out the Invention]

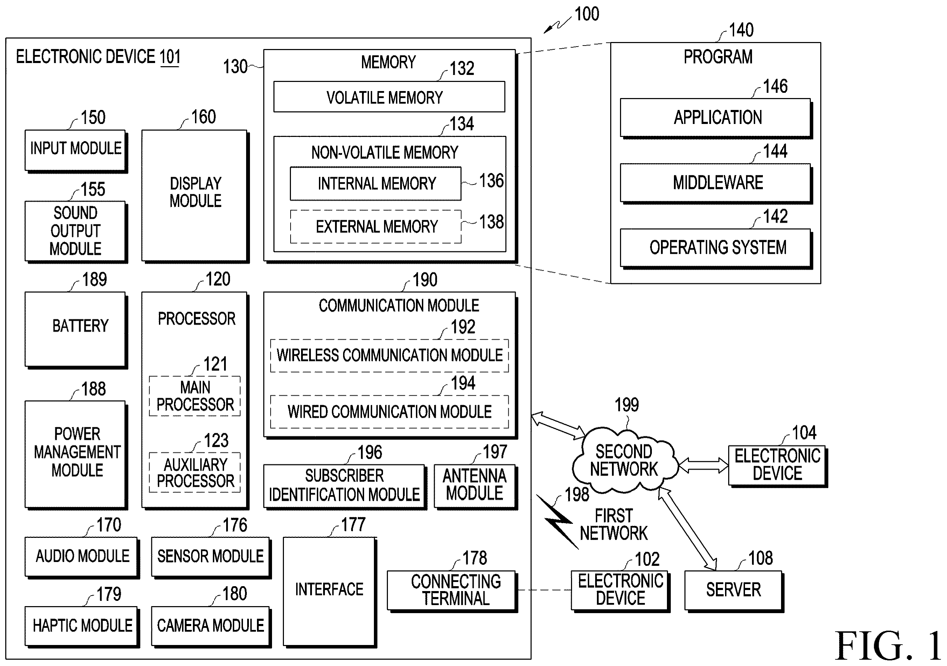

FIG. 1 is a block diagram illustrating an electronic device 101 in a network environment 100 according to an embodiment.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

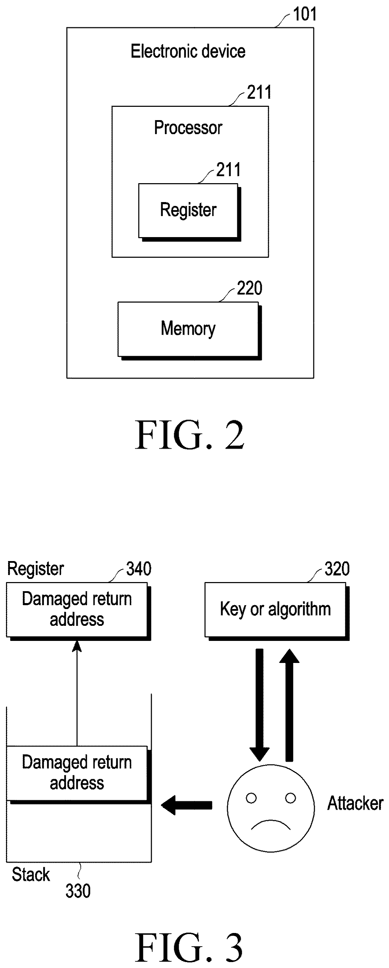

FIG. 2 is a diagram illustrating an example of a configuration of an electronic device 101 according to an embodiment. However, the electronic device 101 may be implemented to include more components or fewer components than the components illustrated in FIG. 2, and is not limited to the components illustrated in FIG. 2.

Referring to FIG. 2, the electronic device 101 may include a processor 210 and memory 220.

The processor 210 may include at least one register 211. According to an embodiment, the processor 210 may include a central processing unit (CPU). The operation of the processor 210 described below may be performed by execution of modules stored in the memory 220. For example, at least a portion of the modules may be implemented (e.g., executed) by software, firmware, or a combination of at least two of them. For example, the modules may be implemented in the form of an application, a program, computer code, instructions, a routine, or a process executable by the processor 320. Accordingly, when the modules are executed by the processor 210, the modules may cause the processor 210 to perform operations (or functions that the modules are capable of providing) associated with the modules. Therefore, in the following description, a statement that a specific module performs an operation may be construed to mean that the processor 210 performs the operation as a result of executing the specific module. Alternatively, the modules may be implemented as a part of a specific application. Alternatively, the modules may be implemented as hardware (e.g., processor, control circuit) separate from the processor 210, and not limited to the descriptions and/or illustrations.. The processor 210 may perform various functions and operations related to the memory management method for security described below by performing instructions stored in the memory 220.

In response to a program execution request by a user, program information may be loaded into the memory 22, and the processor 210 may read program code stored in the memory 220 and execute instructions. When a function is called while the processor 210 is executing the program code, the processor 210 branches to the called function to execute the corresponding function, and when the function call is completed, the processor 210 returns to an original function to execute a next instruction. In a part that calls a function, a current program counter (i.e., return address) and data necessary for function call and execution, for example, local variables, parameters, and the like, may be stored in a stack area. The stack area is a temporary memory area automatically used by a program, and is allocated together with a function call, and is then released when the function is terminated. The return address is an address for returning control to the place where the function was called, after completion of execution of the function. When a function is called, an address to be executed after the currently executed instruction is stored as a return address. The return address refers to the address of a subsequent instruction of the called function or instruction. The return address is pushed onto a stack when a function is called and popped when the function is terminated to restore the program counter. Through this, the processor 210 may execute an instruction stored at an address of a value indicated by the restored program counter when the function is terminated.

In an embodiment, in order to protect the return address, the processor 210 may generate a random key at the time of program startup and store the same in the register 211, and may encrypt and decrypt a return address by using a value stored in the register 211 during execution of each function. This will be described in more detail below.

The memory 220 (e.g., memory 130 in FIG. 1) may store data output from an application. According to an embodiment, the application 210 may be executed by the processor 210, and the processor 210 may store data generated during execution of the application in the memory 220. According to an embodiment, the processor 210 may read data required during the execution of the application from the memory 220. According to an embodiment, the memory 220 may store computer-executable instructions configured to perform various functions and operations related to a memory management method for security. According to an embodiment, the memory 220 may store instructions for generating a random key at the time of program startup, storing the generated random key in the register 211, and encrypting and decrypting a return address by using a value stored in the register 211 during the execution of each function, in order to protect the return address. According to an embodiment, the memory 220 may include a stack area for storing a return address generated by each function when a program is executed.

The register 211 may be volatile memory and may be low-capacity memory as compared to the memory 220. The register 211 may temporarily store a random key to be used to encrypt a return address at the time at which a program executed by the processor 210 starts, and an encrypted return address. According to an embodiment, the register 211 may be a storage space in which data reading, modification, or deletion is performed in a limited manner. The electronic device 101 may be configured to allow access to the register 211 only for a predetermined instruction set. For example, data of the register 211 may be read, modified, or deleted according to a predetermined instruction. The information stored in the register 211 may be used to decrypt an encrypted return address. This will be described in more detail below.

FIG. 3 is a diagram illustrating a memory management method for security according to an embodiment.

As illustrated in FIG. 3, an ROP attack may change a return address to be loaded into a register 340 stored in a stack 330 of a kernel by causing an overflow of a variable stored in the stack 330. In addition, to prevent the return address from being changed, a method such as address space layout randomization (ASLR) may be used, in which a key is added when a program is loaded into memory so as to randomly vary the address, or a method such as data execution prevention (DEP) may be used, in which an algorithm 320 is added to block code execution in a region other than the memory area in which an executable code is located. In this case, the attacker may attack the key or algorithm 320 added to prevent the return address from being changed, so as to execute the attacker's desired code. Accordingly, the register 340 may store a damaged return address (damaged return address) that is damaged by the attacker's manipulation.

In more detail, when execution of kernel code (or process) is started by a kernel, the processor may execute executable code stored in the memory in a sequential manner. For example, when function B, which is an internal function of function A, is called while function A at address 1 is being executed, the processor may move to address 3 for executing function B, and may store, in the stack, a return address (address 2), so as to return to address 2 corresponding to a next address of address 1 which is the current address, after the execution of function B is completed. In this case, in case that a stack overflow attack occurs and the return address (address 2) stored in the stack is manipulated to be a different address (address 4), the processor may store the manipulated return address in the stack in a register before performing return after finishing the operation of function A. Accordingly, the manipulated return address (address 4) may be stored in the register. Accordingly, the process does not jump to address 2, which corresponds to a normal return address, after completing the operation of function A, but rather to address 4, which is a return address manipulated by the attacker, and thus an ROP attack may be initiated due to the execution of unintended code.

In order to prevent such an ROP attack, various control flow integrity (CFI) protection techniques are being used. For example, a shadow stack may be generated in a hardware manner as a separate storage space that is inaccessible by an attacker, in addition to an existing stack, and a return address may be additionally stored in the shadow stack, so that a return address may be prevented from being manipulated.

Since the above-mentioned method requires the support of hardware, the corresponding protection technique may not be applied to a low-cost electronic device that does not support the corresponding functions. Therefore, there is a need to consider a method of enhancing security in memory through software in devices for which security is more important than performance.

Hereinafter, a memory management method for improving security in memory in a software manner and operations of an electronic device for the same will be described in detail with reference to the accompanying drawings.

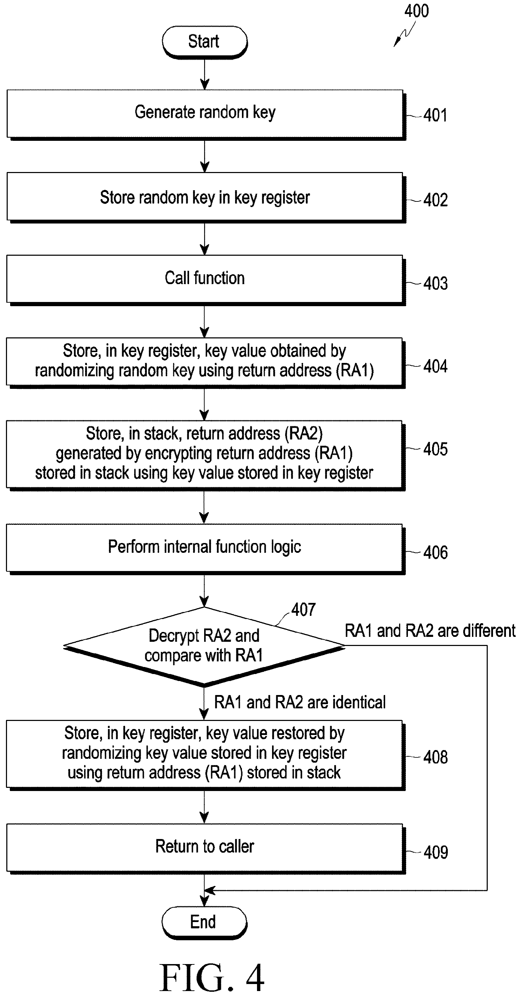

FIG. 4 is a flowchart 400 illustrating an example of an operation of the electronic device 101 according to an embodiment. The operations illustrated in FIG. 4 may be performed in various orders and are not limited to the order illustrated. In addition, according to an embodiment, more operations than the operations illustrated in FIG. 4 may be performed, or at least one operation which is fewer than the example may be performed.

According to an embodiment, the electronic device 101 (e.g., processor 210 of FIG. 2) may generate a random key for encrypting a return address before a program start time, that is, before a main function (main()) is started, in operation 401, and may store the random key in a key register (e.g., register 211 of FIG. 2) in operation 402.

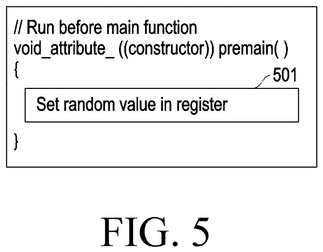

FIG. 5 illustrates an example of a program code for configuring an initial value to a random value in a key register according to an embodiment. Referring to FIG. 5, a compiler may insert code for configuring the initial value to a random value in the key register, as in 501, to code to be executed before performing a main function. According to an embodiment, the same random key value may be applied to multiple functions, or different random key values may be generated for multiple functions. Various schemes may be used to generate a random key, and the disclosure does not limit a scheme of generating a random key. According to an embodiment, the key register in which a random key is stored may be compiled to be inaccessible by a program developer or to be inaccessible by code other than code designated by a compiler.

In operation 403, the electronic device 101 (e.g., processor 210) may call an external function while performing the logic of a main function. According to an embodiment, when calling the external function, the processor 210 of the electronic device 101 may store a return address (RA1) in a stack, and then jump to the external function. When calling the external function, the processor 210 of the electronic device 101 may store a previous stack frame in the stack and may configure a new stack frame for performing the external function logic.

In operation 404, the electronic device 101 (e.g., processor 210) may read a random key stored in the key register before performing the logic of the external function, and store, in the key register, a key value obtained by randomizing the random key using the return address (RA1) stored in the stack. According to an embodiment, a key value obtained by performing an XOR operation on a random key and the return address (RA1) may be stored in the key register. In addition to the XOR operation, other methods such as an addition or subtraction operation may be used as the randomization method.

In operation 405, the electronic device 101 (e.g., processor 210) may generate a return address (RA2) by encrypting the return address (RA1) stored in the stack with the key value stored in the key register, and store the return address (RA2) in the stack. According to an embodiment, as a method of encrypting a return address, a method of performing an addition or subtraction operation on the return address (RA1) stored in the stack and the key value stored in the key register may be used. In addition, various methods may be used to generate the return address RA2 by encrypting the return address RA1, and the disclosure does not limit an encryption scheme.

In operation 406, the electronic device 101 (e.g., processor 210) may allocate a local variable for the external function and perform the internal logic of the external function.

In operation 407, before the electronic device 101 (e.g., processor 210) terminates the external function and returns to the caller, the electronic device 101 may decrypt the encrypted return address (RA2) stored in the stack by using the key value stored in the key register, and may compare the decrypted return address (RA2) with the return address (RA1) stored in the stack. According to an embodiment, as a method of decrypting the return address (RA2), a decryption method corresponding to the method of encrypting the return address (RA1) stored in the stack by using the key value stored in the key register may be used. For example, when the encryption method is an addition operation, the decryption method may be a subtraction operation, and when the encryption method is a subtraction operation, the decryption method may be an addition operation.

In the case where the decrypted return address (RA2) and the return address (RA1) stored in the stack are different, the electronic device 101 (e.g., processor 210) may terminate the operation without returning to the caller, and in the case where the decrypted return address (RA2) and the return address (RA1) stored in the stack are identical, the electronic device 101 may, in operation 408, restore the key value by rerandomizing the key value stored in the key register using the return address (RA1) stored in the stack, and store the restored key value in the key register.

In operation 409, the electronic device 101 (e.g., processor 210) may restore a stack pointer and a stack frame used in the external function, and may return to the function that called the external function.

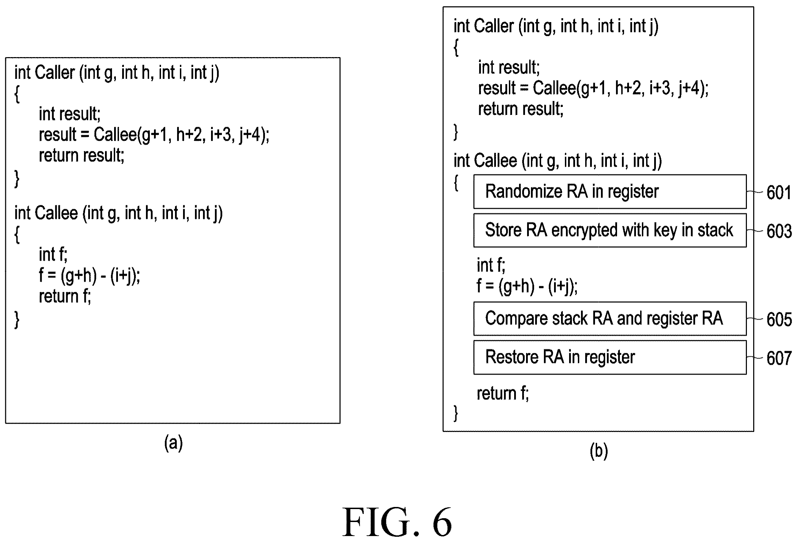

FIG. 6 illustrates an example of source code of a program for protecting a return address according to an embodiment. FIG. 6 illustrates a comparison of general program source code and program source code according to an embodiment of the disclosure for the sake of descriptive convenience.

Referring to FIG. 6, a compiler may compile program source code to store a return address (RA1) for a function (caller) in a stack before calling a function (callee) while performing the logic of the function (caller), and this program source code may be applied identically in both (a) and (b) of FIG. 6. According to an embodiment, the compiler may insert, in the program source code, code 601 for storing, in a key register, a key value obtained by randomizing a random value stored in the key register using a return address (RA1) stored in a stack before performing logic of the called function (callee), and code 603 for storing, in the stack, a return address (RA2) generated by encrypting the return address (RA1) with the key value stored in the key register. In code 601, as an example of a method of generating a key value by randomizing a random value stored in the key register by using the return address (RA1), a method of performing an XOR operation on the return address (RA1) stored in the stack and the random value stored in the key register may be used, and as another method, a method of performing an addition or subtraction operation may be used. The disclosure does not limit a randomization method. According to the code 603, a return address (RA2), which is generated by encrypting the return address (RA1) with the key value , is stored in the stack, and the key value used to encrypt the return address (RA2) is stored in the key register, and thus an attacker may be incapable of accessing the key value. Therefore, the attacker is incapable of knowing the key value used to generate the return address (RA2) by encrypting the return address (RA1), and thus the return address (RA2) may be prevented from being arbitrarily manipulated by the attacker. According to an embodiment, into the program source code, the compiler may insert code 605 for comparing the return address (RA2) and the return address (RA1) stored in the stack before returning to the caller function (caller) after performing the logic of the called function (callee), and code 607 for restoring the key value stored in the key register. According to an embodiment, when the XOR operation is used as the randomization method in code 603, the key value before randomization may be restored by using the XOR operation again in code 607. According to an embodiment, by performing code 605, the electronic device 101 (e.g., processor 210) may identify that the return address (RA1) and the return address (RA2) are the same, and may identify that the return address (RA1) is not modulated and that the logic is normally executed from the start of the function without an attacker's attack, and the return address (RA2) is normally generated. According to an embodiment, when the return address (RA1) and the return address (RA2) are different, the electronic device 101 (e.g., processor 210) may not return to the caller, but instead terminate the program via exception handling.

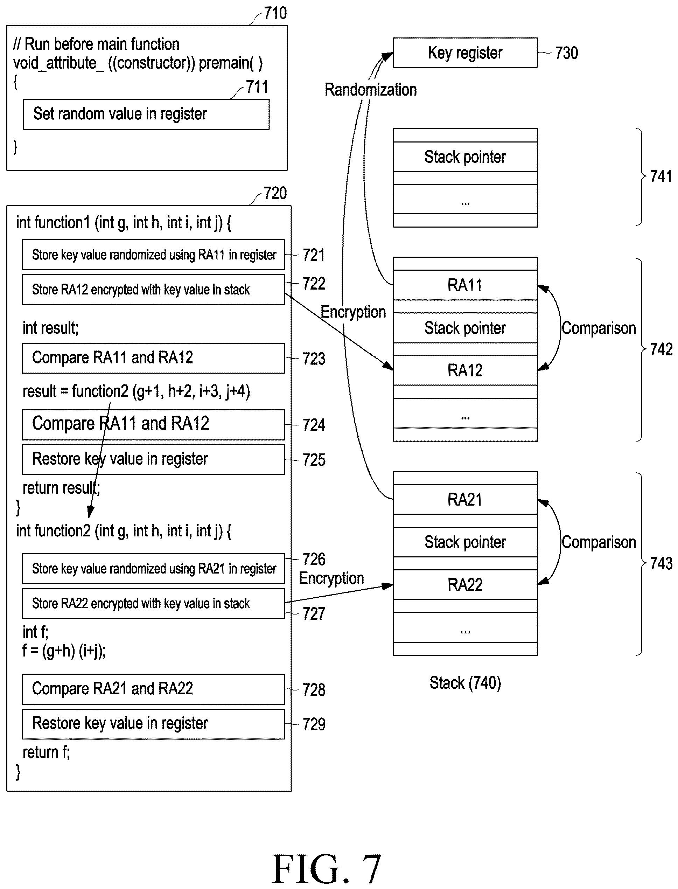

FIG. 7 illustrates a program source code and a stack for protecting a return address according to an embodiment. FIG. 7 illustrates program source code and a stack in which function 1 (function 1()) is called by a main function, and function 2 (function 2()) is called by function 1 (function 1()).

Referring to FIG. 7, 710 is source code that is performed before the main function is performed at a program start time. According to an embodiment, in the code performed before performing the main function at the beginning of a program, a compiler may insert code 711 for configuring an initial value to a random value in a key register 730. According to an embodiment, the electronic device 101 (e.g., processor 210) may store a random value in the key register 730 by performing the source code 711 before performing the main function at the program start time. According to an embodiment, a random value may be generated in various ways, such as reading a pre-stored random value from memory or configuring a random value based on a current time, and the disclosure does not limit a method of generating a random value. The random value stored in the key register 730 may be used to encrypt and protect a return address value stored in a stack 740 later. According to an embodiment, by executing the source code 710 and then executing the remaining part of the main function, the electronic device 101 (e.g., processor 210) may store a stack pointer in a stack area 741 of the main function, and function 1 (function 1()) may be called by the main function.

Diagram 720 shows an example of program source code for an individual function (e.g., function 1() and function 2()). The compiler may insert, into a start of each function, code 721 and 726 to store, in the key register 730, a key value obtained by randomizing a random value stored in the key register 730 by using a return address (RA11, RA21) stored in the stack 740, and code 722 and 727 to generate a return address (RA12, RA22) by encrypting the return address (RA11, RA21) stored in the stack 740 by using the key value stored in the key register 730, and to store the return address (RA12, RA22) in the stack 740. In the code 721 and 726, as a method of randomizing a random value stored in the key register 730 using the return address (RA11), a method of performing an XOR operation on the return address (RA11) stored in a stack area 742 and a random value stored in the key register 730 may be used, and as another randomization method, an addition or subtraction operation may be used. The disclosure does not limit a specific randomization method.

When the function 1 (function 1()) is called by the main function, the electronic device 101 (e.g., processor 210) may store the return address (RA11) and the stack pointer in the stack area 742 of the function 1 (function 1()). At the beginning of function 1(function 1()), the electronic device 101 (e.g., processor 210) may execute code 721 to generate a key value by randomizing a random value stored in the key register 730 using the return address (RA11) and store the generated key value in the key register 730, may execute code 722 to encrypt the return address (RA11) using the key value randomized and stored in the key register 730, and store the encrypted return address as the return address (RA12) in the stack area 742 of function 1(function 1()), and then execute the remaining code of the function 1(function 1()). Various encryption methods may be used as an encryption method, and the disclosure does not limit a specific encryption method. The key value used when the return address RA12 is generated by encrypting the return address RA11 is stored in the key register 730, and thus an attacker may not be accessible. Therefore, the attacker is incapable of knowing the key value used to encrypt the return address (RA22), and thus arbitrary manipulation of the return address (RA12) by the attacker may be prevented.

According an embodiment, the compiler may insert code 723 for decrypting a return address (RA12) stored in the stack area 742 of function 1(function 1()) using the key value stored in the key register 730, and comparing the decrypted return address (RA12) and the return address (RA11) stored in the stack area 742 of function 1(function 1()) before calling function 2(function 2()) in the logic of function 1(function 1()). According to an embodiment, by executing code 723, the electronic device 101 (e.g., processor 210) may decrypt the return address (RA12) stored in the stack area 742 of function 1 (function 1()) using the key value stored in the key register 730, may compare the decrypted return address (RA12) with the return address (RA11) stored in the stack area 742 of function 1 (function 1()), and when a comparison result indicates that the two values are different, the electronic device 101 may perform exception handling to terminate the program. A method of decrypting the return address (RA12) stored in the stack area 742 of the function 1(function 1()) by using the key value stored in the key register 730 may use a decryption method corresponding to a method of encrypting the return address (RA12) in the code 722. For example, when the encryption method is an addition operation, the decryption method may be a subtraction operation, and when the encryption method is a subtraction operation, the decryption method may be an addition operation.

According to an embodiment, by performing the code 723, the electronic device 101 (e.g., processor 210) may identify that the return address (RA11) and the return address (RA12) are the same, and thus may identify that the return address (RA11) is not modulated and that the function 1 (function 1()) is normally executed from the start part without an attack by an attacker and the return address (RA12) is normally generated. According to an embodiment, when a jump to an arbitrary intermediate part of the function occurs by an attacker, the code 721 and the code 722 are not performed, and thus the two values are not the same, and in this instance, exception handling may be performed to terminate the program, and other code may be prevented from being arbitrarily performed.

When function 2 (function 2()) is called by function 1 (function 1()), the electronic device 101 (e.g., processor 210) may store a return address (RA21) and a stack pointer in a stack area 743 of function 2 (function 2()). At the beginning of function 2(function 2()), the electronic device 101 (e.g., processor 210) may execute code 726 to generate a key value by randomizing a random value stored in the key register 730 using the return address (RA21) and store the generated key value in the key register 730, may execute code 727 to encrypt the return address (RA21) using the key value randomized and stored in the key register 730, and store the encrypted return address as a return address (RA22) in the stack area 743 of function 2(function 2()), and then execute the remaining code of the function 2(function 2()). As an example of a method of generating a key value by randomizing a random value using the return address (RA21) in code 726, a method of performing an XOR operation on a random value stored in the key register 730 and the return address (RA21) stored in the stack area 743 may be used, and the disclosure does not limit a randomization method.

According to an embodiment, into a front part of a command code (return) for returning to a caller of each function, the compiler may insert code 724 and 728 for decrypting a return address (RA12, RA22) stored in the stack area of each function by using a key value stored in the key register 730, and comparing the decrypted return address (RA12, RA22) with the return address (RA11, RA21) stored in the stack area of each function, and may insert code 725 and 729 for restoring the key value stored in the key register 730 to a value when each function was called, by using the return address (RA11, RA21) stored in the stack area of the corresponding function. According to an embodiment, when an XOR operation is used as the randomization method in the code 721, the XOR operation is used again in the code 725 and 729, so as to restore a key value before randomization.

According to an embodiment, after executing code 727, the electronic device 101 (e.g., processor 210) may execute the remaining code of function 2(function 2()) and, before returning to function 1(function 1()), may execute code 728 to decrypt the return address (RA22) stored in the stack area 743 of function 2(function 2()) using the key value stored in the key register 730, and compare the decrypted return address (RA22) and the return address (RA21) stored in the stack area 743 of function 2(function 2()), and when a comparison result indicates that the two values are different, the electronic device 101 may perform exception handling to terminate the program. According to an embodiment, when an XOR operation is used as the encryption method in code 726, the XOR operation may be used again as the decryption method in code 728 so as to restore a return address before encryption. According to an embodiment, by executing code 728, the electronic device 101 (e.g., processor 210) may identify that the return address (RA21) and the return address (RA22) are the same. The electronic device 101 may identify that the return address (RA21) is not modulated, and that the function 2 (function 2()) is executed normally from the beginning without an attack by an attacker, such that the return address (RA22) is normally generated. Then, by executing code 729, the electronic device 101 may restore the key value stored in the key register 730 to a value before the function 2 (function 2()) was called, by using the return address (RA21) stored in the stack area 743 of the function 2 (function 2()), and may return to the function 1 (function 1()). According to an embodiment, when a jump to an arbitrary intermediate part of the function occurs by an attacker, the code 726 and the code 727 are not performed, and thus the two values are not the same, and in this instance, exception handling may be performed to terminate the program, and other codes may be prevented from being arbitrarily performed.

According to an embodiment, the electronic device 101 (e.g., processor 210) that returns to function 1(function 1()) after performing function 2(function 2()) may, before returning to function 1(function 1()), have executed code 724 to decrypt the return address (RA12) stored in the stack area 742 of function 1(function 1()) using the key value stored in the key register 730, compare the decrypted return address (RA12) with the return address (RA11) stored in the stack area 742 of function 1(function 1()), and perform exception handling to end the program when a comparison result indicates that the two values are different. According to an embodiment, when an XOR operation is used as the encryption method in code 722, an XOR operation may be used again as the decryption method in code 724, so as to restore a return address before randomization. According to an embodiment, by performing code 724, the electronic device 101 (e.g., processor 210) identifies that the return address (RA11) and the return address (RA12) are the same. The electronic device 101 may then identify that the return address (RA11) is not modulated and that the function 1 (function 1()) is executed normally from the beginning without an attacker's attack, so that the return address (RA12) is normally generated. By executing code 725, the electronic device 101 may restore the value stored in the key register 730 to a value before the function 2 (function 2()) was called, by using the return address (RA11) stored in the stack area 742 of the function 1 (function 1()), and may return to a function that called the function 1 (function 1()). According to an embodiment, when a jump to an arbitrary intermediate part of the function occurs by an attacker, the code 721 and the code 722 are not performed, and thus the two values are not the same, and in this instance, exception handling may be performed to terminate the program, and other code may be prevented from being arbitrarily performed.

According to an embodiment, the method of protecting a return address according to the disclosure may be applied even when multiple processes are operating. When multiple processes are in operation, context switching may occur between the processes. When context switching occurs, a value generated by the currently executed process (e.g., process 1) and stored in a key register may be securely backed up to memory allocated to process 1, and the key register may be initialized as another process (e.g., process 2) is subsequently executed, and a key value generated by process 2 may be stored in the key register. When context switching to process 1 occurs again, since process 2 is suspended or completed, a value generated by process 2 and stored in the key register may be securely backed up to memory allocated to process 2, and then the key register may be initialized as process 1 is performed and a value backed up to the memory allocated to process 1 may be read and stored in the key register.

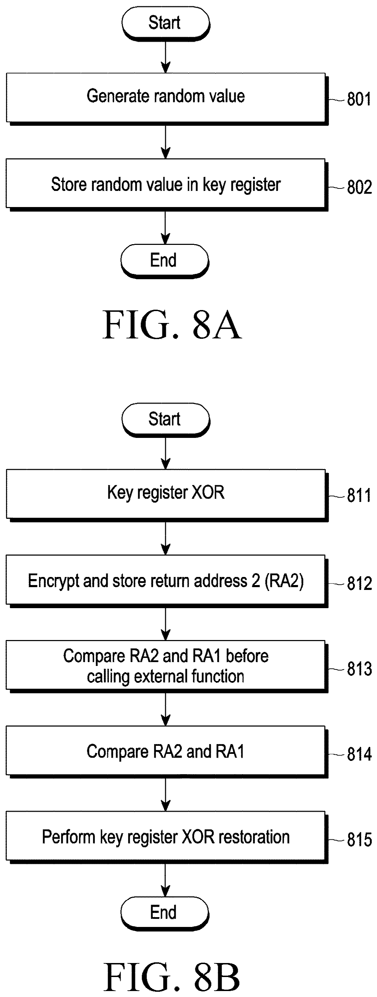

FIGS. 8A and 8B are diagrams illustrating a procedure of writing source code of a program for protecting a return address during a build time according to an embodiment. FIG. 8A illustrates a procedure of writing code performed before a main function starts at a program start time according to an embodiment, and FIG. 8B illustrates a procedure of writing code performed in individual functions according to an embodiment. Although FIGS. 8A and 8B describe that program source code is written by a compiler, instructions may be added to already compiled code.

Referring to FIG. 8A, in operation 801, the compiler may write code that generates a random key value for protecting a return address as code to be performed before a main function is started at the program start time. According to an embodiment, the same random key value may be applied to multiple functions, or different random key values may be generated for multiple functions. Various schemes may be used to generate a random key, and the disclosure does not limit a random key generation scheme.

In operation 802, the compiler may write code for storing the generated random key in a key register. According to an embodiment, a random key stored in the key register may be used to protect a return address stored in a stack when a function is executed later. According to an embodiment, the key register in which a random key is stored may be compiled to be inaccessible by a program developer or to be inaccessible by code other than code designated by a compiler.

Referring to FIG. 8B, in operation 811, the compiler may write code that randomizes a random key stored in the key register using a return address stored in the stack, and stores the randomized key value in the key register in the prologue of each function included in the program. In FIG. 8B, a method in which an XOR operation is performed on a random key stored in the key register and a return address stored in the stack is given as an example of a randomization method, and other methods such as an addition or subtraction operation may be used for the randomization method.

In operation 812, the compiler may write code to encrypt a return address (RA1) stored in the stack and store the encrypted return address (RA2) in the stack, in the prologue of each function included in the program. According to an embodiment, the compiler may write code to encrypt the return address (RA1) stored in the stack using the randomized key value stored in the key register, and store the encrypted return address (RA2) in the stack. According to an embodiment, as a method of encrypting a return address, a method of performing an addition or subtraction operation on the return address (RA1) stored in the stack and the key value stored in the key register may be used. In addition, various methods may be used to generate the return address (RA2) by encrypting the return address (RA1), and the disclosure does not limit an encryption scheme.

In operation 813, the compiler may write code to compare the encrypted return address (RA2) and the return address (RA1) stored in the stack before calling an external function, in a body part of each function included in the program. According to an embodiment, the compiler may write code to decrypt the encrypted return address (RA2) using the key value stored in the key register before calling an external function, compare the decrypted return address and the return address (RA1) stored in the stack, and when the comparison result indicates that the two values are different, terminate the program by performing exception handling, rather than returning to a caller. According to an embodiment, as the method of decrypting the return address, a decryption method corresponding to the method of encrypting the return address (RA2) stored in the stack and the key value stored in the key register may be used. For example, when the encryption method is an addition operation, the decryption method may be a subtraction operation, and when the encryption method is a subtraction operation, the decryption method may be an addition operation.

In operation 814, the compiler may write code to compare the encrypted return address (RA2) and the return address (RA1) stored in the stack in the epilogue of each function included in the program. According to an embodiment, the compiler may write code to decrypt the encrypted return address (RA2) using the randomized key value stored in the key register, compare the decrypted return address and the return address (RA1) stored in the stack, and perform exception handling and terminate the program when the comparison result indicates that the two values are different, rather than returning to the caller. According to an embodiment, as the method of decrypting the return address, a decryption method corresponding to the method of encrypting the return address stored in the key register and the return address (RA2) stored in the stack may be used. For example, when the encryption method is an addition operation, the decryption method may be a subtraction operation, and when the encryption method is a subtraction operation, the decryption method may be an addition operation.

In operation 815, the compiler may write code to restore the key value stored in the key register in the epilogue part of each function included in the program. According to an embodiment, the compiler may store, in the key register, a key value restored by randomizing the key value stored in the key register again using the return address (RA1) stored in the stack. According to an embodiment, when an XOR operation is used as the randomization method in operation 811, the XOR operation may be used again in operation 815 so as to restore the key value before the randomization. According to an embodiment, when an addition or subtraction operation is used as the randomization method in operation 811, the addition or subtraction operation may be used again in operation 815 so as to restore the key value before randomization.

In the descriptions, the disclosure has been described with regard to preferred embodiments thereof. Those skilled in the art to which the disclosure belongs will appreciate that the disclosure may be implemented in a modified form without departing from the essential characteristics thereof. Therefore, the disclosed embodiments should be considered in a descriptive sense rather than a limiting sense. The scope of the disclosure is not defined by the above description, but by the appended claims, and all differences within the equivalent scope of the claims should be construed as being included in the disclosure.

## Claims

1. An electronic device (101) comprising:
at least one processor (210); and
memory (220) connected to the at least one processor,
wherein the memory stores instructions that, when executed by the at least one processor, cause the electronic device to:
generate (401) a random key at a point in time when a first program is executed, and store (402) the generated random key in a register (211) included in the at least one processor;
perform a first function included in the first program;
as a second function is called in the first function, store (403) a first return address for the first function in the memory (220);
store (404), in the register, a first key value generated by randomizing the random key stored in the register using the first return address;
store (405), in the memory, a second return address generated by encrypting the first return address with the first key value;
perform (406) the second function;
decrypt (407) the second return address;
when the decrypted second return address is identical to the first return address, restore (408) the first key value using the first return address and store the restored first key value in the register; and
terminate (409) the second function, and return to the first function.

2. The electronic device of claim 1, wherein the memory stores instructions that, when executed by the at least one processor, cause the electronic device to:
decrypt the second return address with the first key value, and
when the decrypted second return address is identical to the first return address, restore the first key value using the first return address and store the restored first key value in the register.

3. The electronic device of claim 1, wherein the memory stores instructions that, when executed by the at least one processor, cause the electronic device to:
generate the first key value by performing an XOR operation on the random key stored in the register and the first return address; and
restore the first key value by performing an XOR operation on the first return address and the first key value.

4. The electronic device of claim 1, wherein the memory stores instructions that, when executed by the at least one processor, cause the electronic device to:
generate the first key value by performing an addition operation on the random key stored in the register and the first return address; and
restore the first key value by performing a subtraction operation on the first return address and the first key value.

5. The electronic device of claim 1, wherein the memory stores instructions that, when executed by the at least one processor, cause the electronic device to:
generate the first key value by performing a subtraction operation on the random key stored in the register and the first return address; and
restore the first key value by performing an addition operation on the first return address and the first key value.

6. The electronic device of claim 1, wherein the memory stores instructions that, when executed by the at least one processor, cause the electronic device to, when the decrypted second return address is different from the first return address, terminate the first program.

7. The electronic device of claim 1, wherein the memory stores instructions that, when executed by the at least one processor, cause the electronic device to:
store a third return address for the first function in the memory (220) at a start of performing the first function;
store, in the register, a second key value generated by randomizing the random key stored in the register using the third return address; and
before calling the second function, decrypt the third return address with the second key value, and when the decrypted third return address is different from the third return address, terminate the first program.

8. A memory management method of an electronic device (101), the method comprising:
generating (401) a random key at a point in time when a first program is executed, and storing (402) the generated random key in a register (211) included in at least one processor;
performing a first function included in the first program;
as a second function is called in the first function, storing (403) a first return address for the first function in memory (220);
storing (404), in the register, a first key value generated by randomizing the random key stored in the register using the first return address;
storing (405), in the memory, a second return address generated by encrypting the first return address with the first key value;
performing (406) the second function;
decrypting (407) the second return address;
when the decrypted second return address is identical to the first return address, restoring (408) the first key value using the first return address, and storing the restored first key value in the register; and
terminating (409) the second function and returning to the first function (409).

9. The method of claim 8, further comprising decrypting the second return address with the first key value, and when the decrypted second return address is identical to the first return address, restoring the first key value using the first return address and storing the restored first key value in the register.

10. The method of claim 8, further comprising:
generating the first key value by performing an XOR operation on the random key stored in the register and the first return address; and
storing instructions to restore the first key value by performing an XOR operation on the first return address and the first key value.

11. The method of claim 8, further comprising:
generating the first key value by performing an addition operation on the random key stored in the register and the first return address; and
storing instructions to restore the first key value by performing a subtraction operation on the first return address and the first key value.

12. The method of claim 8, further comprising:
generating the first key value by performing a subtraction operation on the random key stored in the register and the first return address; and
storing instructions to restore the first key value by performing an addition operation on the first return address and the first key value.

13. The method of claim 8, further comprising storing instructions to, when the decrypted second return address is different from the first return address, terminate the first program.

14. The method of claim 8, further comprising:
storing a third return address for the first function in the memory (220) at a start of performing the first function;
storing, in the register, a second key value generated by randomizing the random key stored in the register using the third return address; and
before calling the second function, decrypting the third return address with the second key value, and when the decrypted third return address is different from the third return address, terminating the first program.

15. A non-transitory computer-readable medium storing computer-executable instructions, the computer-executable instructions being configured to, when executed, cause an electronic device including at least one processor to:
generate (401) a random key at a point in time when a first program is executed, and store (402) the generated random key in a register (211) included in the at least one processor;
perform a first function included in the first program;
as a second function is called in the first function, store (403) a first return address for the first function in memory (220);
store (404), in the register, a first key value generated by randomizing the random key stored in the register using the first return address;
store (405), in the memory, a second return address generated by encrypting the first return address with the first key value;
perform (406) the second function;
decrypt (407) the second return address;
when the decrypted second return address is identical to the first return address, restore (408) the first key value using the first return address, and store the restored first key value in the register; and
terminate (409) the second function and return to the first function.
